# EUROPEAN PATENT SPECIFICATION

(11) **EP 0 634 299 B1**
(45) Date of publication and mention of the grant of the patent: **16.09.1998**
(21) Application number: 94305206.8
(22) Date of filing: 15.07.1994
(51) Int. Cl.: B60H 3/06, B01D 46/42

(54) **Filter unit for automobile air conditioner**
Filtereinheit für Kraftfahrzeugklimaanlage
Unité de filtre pour conditionneur d'air d'automobile

(30) Priority: 16.07.1993 JP 39060/93 U; 14.03.1994 JP 42716/94
(43) Date of publication of application: 18.01.1995
(73) Proprietor: CALSONIC CORPORATION, Nakano-ku, Tokyo 164 (JP)
(72) Inventor: Kawakami, Naoyuki, Tokyo (JP); Sano, Narihito, Tokyo (JP); Kujirai, Toshisada, Tokyo (JP); Uchino, Setsuya, Tokyo (JP); Onda, Masaharu, Tokyo (JP); Ito, Kaoru, Tokyo (JP)
(74) Representative: Gordon, Michael Vincent

(56) References cited:
- FR-A- 2 396 580
- FR-A- 2 596 288
- US-A- 3 872 012
- US-A- 4 321 070
- PATENT ABSTRACTS OF JAPAN vol. 12, no. 149 (M-694) (2996) 10 May 1988 & JP-A-62 268 939 (MATSUSHITA SEIKO) 21 November 1987

## Description

The present invention relates to an improvement in a filter unit to be installed in the air passage of an automobile air conditioner and used for collecting dust and the like contained in the air blown into the interior of an automobile.

A known type of automobile air conditioner has been designed to enhance comfort in the car interior by installing a filter member midway in a casing forming an air passage so as to collect dust, dirt and the like mixed with the air taken in through an intake unit. The filter member is made of a material such as pulp or cloth and the material is bent into a wavelike shape in cross section to increase the filtering surface area. The filter member of this type is installed in the air passage closer to the downstream side of the flow of air than a blowing fan fitted to the intake unit and also closer to the upstream side than a mixing door rotatably fitted to a heater unit, for example, on the front side of the built-in evaporator of a cooler unit.

In such a conventional filter unit for an automobile air conditioner, the filter member has been disposed over the whole area of the cross section of the air passage.

Filter members used for a certain period of time need cleaning or replacing. If, however, the filter member is continuously used despite the fact that its cleaning or replacement time has passed, it may clog up. Moreover, the filter member becomes easily blocked up even before its cleaning time comes if it is used in a specific area full of dust and dirt such as volcanic ashes.

As the filter member is disposed over the whole area of the cross section of the air passage in the conventional filter unit, the air flow resistance in the air passage considerably increases when the filter member is clogged with waste matter. Consequently, there is the possibility that a designated air flow is not supplied into the car interior.

Some automobile air conditioners are equipped with a cooling air intake in an intake unit which is used to lead part of the air sent from a blower fan to a motor for driving the blower fan so as to cool the motor. When the blower fan is driven, moisture and powder snow contained in air outside the automobile is allowed to penetrate into the intake unit. In order to prevent the moisture and the like from being introduced into the motor, the cooling air intake is installed so that it may protrude up the bottom edge of a casing. Moreover, the moisture and the like thus introduced are discharged from the car interior by a cooler unit which is designed to discharge the moisture condensed on an evaporator.

The filter member arranged between the cooling air intake and the front of the evaporator, however, may act as a wall if the vehicle is left unattended in the winter season because moisture, powder snow and the like are frozen on the filter member. A designated air flow can not be supplied into the car interior in that case as the air flow resistance in the air passage increases. Further, when the automobile air conditioner starts operating, powder snow is caused to be blown up around the filter member acting as a wall and may be taken into the cooling air intake to reach the motor. If a large amount of powder snow penetrates into the motor, there is also the possibility that the smooth operation of the motor is spoiled.

The present inventors have directed particular attention to the fact that user-to-user concern for the clogging of the filter member greatly varies, that is, some users tend to clean and check such filter units very often and some do not, and have decided that it would rather fit the purpose of raising the product value to seek for safety by securing a minimum air flow at the sacrifice of the dust collection performance.

From the results of various tests, the present inventors found out that the positions of bypass passages for a filter member and the ratio of opening of the bypass passages to the sectional area of an air passage greatly affect the performance of an automobile air conditioner.

The performance of the automobile air conditioner refers to:
(1) The blowoff air temperature is made adjustable to a desired level in association with a degree of opening of the mixing door, or the difference in temperature between upper and lower air flows is also adjustable to a desired value in bi-level and defrost/foot modes (temperature regulating performance).
(2) Variations in the blowoff air temperature at each degree of opening of the mixing door remain in a predetermined range (mixing performance).
(3) The weight of powder snow and moisture taken into the cooling air intake is less than the regulated weight (moisture penetration preventive performance).
(4) Defrosting glass windows is ensured (frost-free window performance).

An object of the present invention is to provide a filter unit, for use in an automobile air conditioner, having bypass passages for letting the flow of air bypass a filter member while allowing the automobile air conditioner to satisfactorily fulfil prescribed performance targets, in particular to enhance safety of the automobile air conditioner when the filter member requires replacement or cleaning by stipulating the opening area derived from the bypass passages in relation to the sectional area of an air passage in which the filter member is located.

It is known from JP-A-62-268939, as acknowledged in the preamble to claim 1, for a filter unit to include a generally planar filter member for collecting dust contained in air passing through an air passage, and an open bypass passage provided in the cross-section of the air passage for letting the flow of air bypass the filter member, with a similar arrangement being known from US-A-3872012.

In the present invention, however, as defined in the characterising portion of claim 1, there are a pair of the bypass passages, which are located in the same plane as the filter member and are spatially separated from one another by the filter member, with the total opening area deriving from the two bypass passages accounting for 10% ∼ 20% of the sectional area of the air passage.

Preferably, the bypass passages are located symmetrically to each other with respect to the filter member.

Preferably, the bypass passages are provided in respective opposite end portions of a rectangular cross-section of the air passage where the filter member is located.

Preferably, the bypass passages have substantially the same opening area, with the total opening area of the bypass passages permitting air flow of at least 2 m³/min under a condition that the filter member is completely clogged.

In one embodiment, the filter member is carried by a frame, and each of the bypass passages is constituted by a respective opening formed in the frame carrying the filter member.

In another embodiment, one of the bypass passages is constituted by an opening formed in a frame carrying the filter member, and the other of said bypass passages is constituted by a gap formed in the cross-section of the air passage between an inner wall of the air passage and a distal end of the frame when the frame is secured in place.

In yet another embodiment, the filter member is carried by a frame, and each of the bypass passages is defined by a respective gap between lateral ends of the frame and inner walls of the air passage when the frame is secured in place.

The provision of the bypass passages in respective opposite end portions of the cross section of the air passage where the filter member is located allows the flow of air to bypass the filter member without deviation. Therefore, the performance of the automobile air conditioner is less badly affected than otherwise. Since the air passage is secured because of the bypass passages, moreover, a minimum defrosting air flow, for example, is secured even when the filter member becomes clogged up and safety is thus enhanced.

If the bypass passages have openings substantially equal in area to each other, air is caused to flow uniformly.

In a case where the filter member is installed near the downstream side of a cooling air intake, powder snow and moisture are prevented from being taken into the cooling air intake and from being allowed to enter the motor since the air passage is secured because of the bypass passages, even when the filter member is clogged with dust, frozen moisture and the like.

Several embodiments of the present invention will now be described with reference to the accompanying drawings in which:-
Figure 1 is a schematic block diagram of an automobile air conditioner incorporating a filter unit according to an embodiment of the present invention;
Figure 2 is a sectional view of the principal part of Fig. 1;
Figure 3 is a perspective view of the filter member of Fig. 1;
Figure 4 is a sectional view taken on line 4 - 4 of Fig. 3;
Figure 5(A) is a graph showing mixing performance test results in a vent mode when bypass passages are provided on both sides of the cross section of an air passage;
Figure 5(B) is a graph showing mixing performance test results therein when the bypass passage is provided on only one side of the cross section of the air passage;
Figure 6 is a graph showing the results of moisture penetration preventive performance tests;
Figure 7 is a graph showing the results of mixing performance tests in the vent mode when the opening ratio of the bypass passages of two-sided bypasses is set at 20%;
Figure 8 is a perspective view of a filter member for use in another embodiment of the present invention;
Figure 9 is a sectional view of the principal part of an automobile air conditioner incorporating the filter member of Fig. 8;
Figure 10 is a perspective view of another filter member for use in still another embodiment of the present invention;
Figure 11 is a sectional view of the principal part of an automobile air conditioner with the filter member of Fig. 10 inserted from the top of the case; and
Figure 12 is a sectional view of the principal part of an automobile air conditioner with the filter member of Fig. 10 inserted from the bottom of the case.

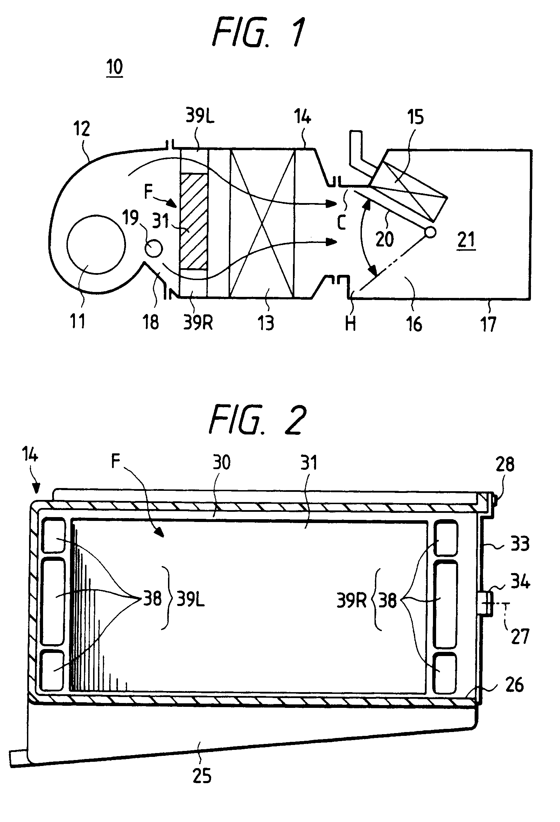

As shown in Fig. 1, an automobile air conditioner 10 comprises an intake unit 12 having a built-in motor-driven blower fan 11 which is used for selectively taking in air from outside or inside the automobile, a cooler unit 14 having a built-in evaporator 13 for cooling the air, and a heater unit 17 wherein a heater core 15 through which engine-cooling water circulates is disposed to define a bypass 16. These components are coupled together. A cooling air intake 19 for guiding part of the air sent out by the blower fan 11 to the motor is installed near an air outlet 18 of the intake unit 12. The heater unit 17 is provided with a vent blowoff nozzle, a defrost blowoff nozzle and a foot blowoff nozzle, and these nozzles (not shown) are fitted with operable vent, defrost and foot doors, respectively. By properly opening and shutting these doors, one of the following air-conditioning modes can be selected; namely, a vent mode wherein air is blown toward the upper part of the driver's body; a bi-level mode wherein cool air is blown toward the upper part of the driver's body and simultaneously warm air toward the driver's feet; a defrost/foot mode wherein air is blown toward the inner face of a glass window and simultaneously warm air toward the driver's feet; and a foot mode wherein warm air is blown toward the driver's feet.

A mixing door 20 is rotatably provided in front of the heater core 15 and pivoted between a full-cool position C where the front of the heater core 15 is completely closed whereas the bypass 16 is completely opened and a full-hot position H where the bypass 16 is completely closed whereas the front of the heater core 15 is completely opened. The ratio of the amount of air passing through the bypass 16 to that passing through the heater core 15 is determined according to the degree of the opening of the mixing door 20 (on the assumption that the full-cool position C represents closing and the full-hot position H opening), whereby the temperature of the air blown in the car interior can be adjusted. Moreover, a mixing chamber 21 for mixing warm and cool air is formed on the downstream side of the heater core 15.

A removable filter unit F is provided in an air passage downstream from the blower fan 11 fitted to the intake unit 12 and upstream from the mixing door 20, for example, in front of the evaporator 13.

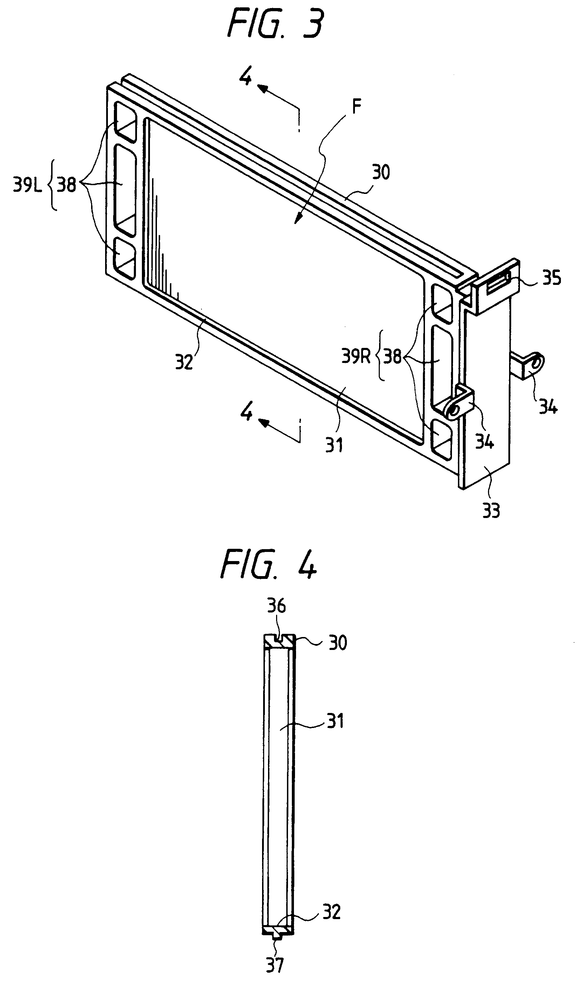

As shown in Fig. 2, the filter unit F is inserted through a slot 26 in the side wall of a cooler unit case 25, and then secured with a screw 27 to the unit case 25. The filter unit F has, as shown in Fig. 3, a resin-molded square frame body 30 and an opening 32 in the center of the frame body 30 for mounting a filter member 31. The filter member 31 is used for collecting dust, dirt and the like contained in the air sent from the intake unit 12 and is made of, for example, pulp, cloth or the like; this material is bent into a wavelike shape in cross section to increase the surface area of the filter member. Moreover, a deodorizing layer for removing odor may be laid on the filter member 31.

A cover plate 33 for covering the slot 26 and the frame body 30 are integrally resin-molded on one side of the frame body 30. The filter unit F is held securely in a predetermined position of the unit case 25 by screwing a mounting plate 34 formed on the cover plate 33 on the unit case 25. A protrusion 28 (see Fig. 2) is formed on the side wall of the case and mated with a through-hole 35 in the upper part of the cover plate 33.

As shown in Fig. 4, a long groove 36 into which a projection (not shown) is fitted is formed in the upper edge face of the frame body 30, whereas a projection 37 to be fitted into a groove (not shown) provided in the case 25 is formed in the lower edge face of the frame body 30. While the projection on the case side remains to fit into the long groove 36 of the frame body 30 with the projection 37 thereof fitted into the groove, the filter unit F is slid in through the slot 26 so that it is held in position. Since the frame body 30 of the filter unit F is secured to the inner face of the case, it is prevented from clattering due to the wind pressure and the vibration of the car. Incidentally, packing is supplied in between the outer face of the case and the cover plate 33 so as to prevent the leakage of the air.

In the case of the filter unit F according to the present invention, there are provided, as shown in Fig. 3, bypass holes 38 on both left and right sides of the filter member mounting opening 32 to cause the flow of air to bypass the filter member 31. The combination of the three bypass holes 38 on the right side of Fig. 3 function as a right side bypass passage 39R, whereas the other combination of the three bypass holes 38 on the left side thereof function as a left side bypass passage 39L. When the filter unit F is installed in the predetermined position of the unit case 25, the left and right bypass passages 39R, 39L are located in both opposite side end portions of the cross section of the air passage where the filter member 31 is positioned, respectively.

As noted previously, the positions of the bypass passages and their opening ratio greatly affects the performance of the automobile air conditioner. Therefore, the present inventors carried out various tests and found out that bypass passages were preferably set up under the following conditions (1) and (2).

The condition 1: the bypass passages are located in both opposite side end portions of the cross section of the air passage where the filter member 31 is positioned, respectively, and these bypass passages have substantially the same opening area.

The condition 2: the total opening area deriving from these bypass passages on both sides accounts for 10% ∼ 20% of the sectional area of the air passage.

Referring to the test results, a description will subsequently be given of these conditions.

### Condition 1:

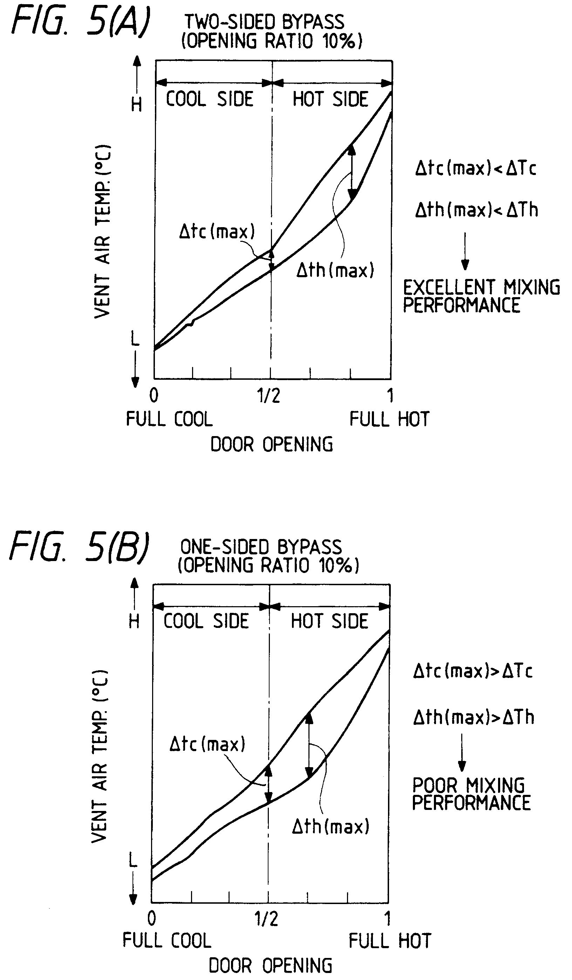

Fig. 5(A) is a graph showing mixing performance test results in the vent mode when the bypass passages are provided on both sides of the cross section of the air passage, and Fig. 5(B) a graph showing mixing performance test results therein when the bypass passage is provided on only one side of the cross section of the air passage. Hereafter, an arrangement of bypass passages on both sides is referred to as a "two-sided bypass", whereas that of a bypass passage on only one side is referred to as a "one-sided bypass". Mixing performance tests were made by setting the opening ratio (the ratio of the total opening area derived from the bypass passages to the sectional area of the air passage) at 10% in both cases of the two-sided and one-sided bypasses.

The mixing performance tests are made to determine the quality of the mixing performance based on the judgement as to whether or not variations in the blowoff air temperature are within ΔTc on the cool side when the opening of the mixing door 20 ranges from the full-cool position C (completely closed) to 1/2, and ΔTh on the hot side when it ranges from 1/2 to the full-hot position H (completely opened), where ΔTc and ΔTh represent values which meet the regulation. Hereafter, variations in the blowoff air temperature are simply called air temperature variations.

In the case of the two-sided bypass, the test results revealed that the maximum temperature variation Δtc (max) on the cool side remained within ΔTc and that the maximum temperature variation Δth (max) on the hot side also remained within ΔTh; in other words, the mixing performance was excellent. In the case of the one-sided bypass, on the other hand, the test results revealed that the maximum temperature variation Δtc (max) on the cool side reached ΔTc + about 2°C and that the maximum temperature variation Δth (max) on the hot side reached ΔTh + about 4°C; in other words, the mixing performance was poor.

The reason for the mixing performance to be unsatisfactory in the case of the one-sided bypass is that the flow of cool air drifts toward the one-sided bypass passage as the air flow resistance in the bypass passage is lower than that in the filter member 31. However, the two-sided bypass allows cool air to flow down through the bypass passages on both sides, so that the flow of cool air is prevented from drifting toward one of side walls of the unit case. Consequently, the mixing performance satisfies the prescribed regulation.

As the drift flow can be prevented on condition that the amount of cool air flowing through each bypass passage in the two-sided bypass is made uniform, it is preferable that the bypass passages on both left and right sides have substantially the same opening area.

### Condition 2:

In order to secure an air flow even when the filter member 31 becomes clogged up, the opening ratio of the bypass passages should preferably be greater, whereas the opening ratio thereof should preferably be smaller in consideration of the efficiency of dust and dirt collection, or the prevention of the drift air flow occurring in the cross section of the air passage. Therefore, there arises the problem of determining where to set the lower and upper limits of the opening ratio.

First, the lower limit of the opening ratio will be considered.

Since the automobile air conditioner is required to offer frost-free window performance, it is necessary, in view of safety purpose, to secure the visual field by defrosting glass windows even when the filter member 31 becomes completely clogged up. Consequently, the lower limit of the opening ratio of the bypass passages is determined so that a minimum yet necessary defrosting air flow is secured even when the filter member 31 becomes completely clogged up.

Although the defrosting air flow is normally about 5 m³/min in such a state that the motor is turned at high speed, a minimum of at least about 2 m³/min is needed. In order to secure the above-noted minimum air flow like this, the opening ratio of the bypass passages was actually 10%.

It was also confirmed by the results of moisture penetration preventive performance tests indicated below that the opening ratio of the bypass passages was required to be not less than 10%.

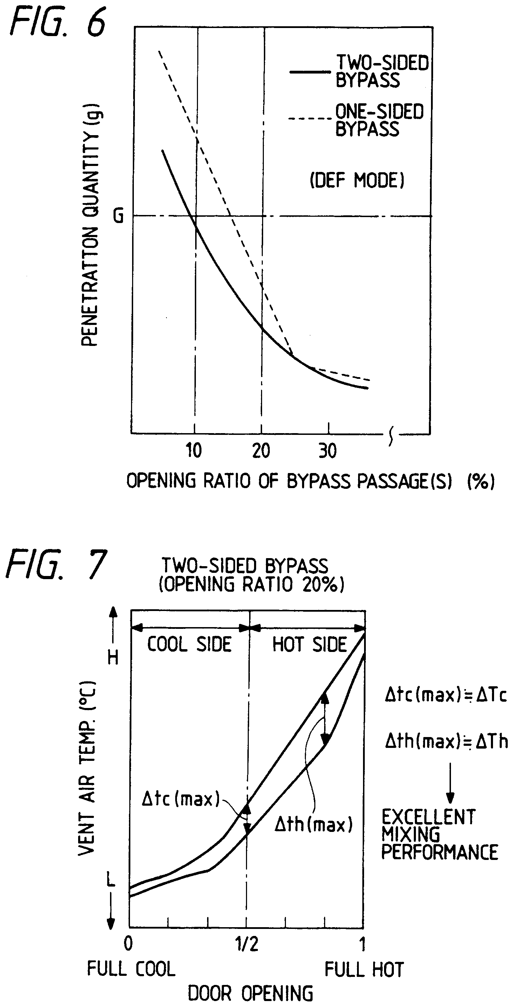

Fig. 6 is a graph showing the results of moisture penetration preventive performance tests. The moisture penetration preventive performance tests are conducted to artificially test the penetration of powder snow into the cooling air intake 19. More specifically, very small grains of foamed styrol having a prescribed diameter are introduced through the air inlet of the intake unit 12 at a predetermined flow rate and a collector is installed midway in the pipe connected to the cooling air intake 19 so as to measure the weight of the foamed styrol grains that have been collected. The judgement is made as to the level of the moisture penetration preventive performance based on whether the measured weight exceeds the regulated weight. In Fig. 6, a solid line represents test results using the filter unit having the two-sided bypass in such a state that the filter member 31 is covered to assume the completely clogged-up condition, whereas a broken line represents the test results using the filter unit having the one-sided bypass in such a state that the filter member 31 is covered to assume the completely clogged-up condition. In this case, the tests were conducted in the defrost mode as an air conditioning mode.

With reference to the test results shown by the solid line, the weight of the foamed styrol grains thus collected was not greater than the regulated weight G and the moisture penetration preventive performance was excellent on condition that the opening ratio of the bypass passages with the two-sided bypass was not less than 10%. When the opening ratio was less than 10%, however, the weight of the foamed styrol grains was greater than the regulated weight and the moisture penetration preventive performance was poor.

The fact that the moisture penetration preventive performance is unsatisfactory when the opening ratio of the bypass passages is not greater than 10% is attributed to the narrow air passage which causes the clogged filter member 31 to function as a wall. As a consequence, the foamed styrol grains are blown up and thus may be taken into the cooling air intake. When the opening ratio is not less than 10%, on the other hand, a certain degree of the cross section of such an air passage can be secured and the foamed styrol grains are not taken into the cooling air intake so much, though blown up more or less, before being caused to flow down up to the cooler unit. Therefore, the moisture penetration preventive performance satisfies the prescribed regulation.

With reference to the test results indicated by the broken line, it was proved that the moisture penetration preventive performance failed to satisfy the prescribed regulation unless the opening ratio of the bypass passage with one-sided bypass was set at not less than 16%. The reason for an increase in the amount of penetration in the case of the one-sided bypass is that as the drift air flow increases, the degree to which the foamed styrol grains are brown up in front of the filter member becomes greater, so that the foamed styrol grains are readily taken into the cooling air intake to that extent.

Subsequently, the upper limit of the opening ratio will be considered.

Needless to say, the smaller the opening ratio is, the better, since increasing the area of the bypass passages results in reduction of the area of the filter member 31, i.e. an effective area for collecting dust and the like. According to the test results in the case of the two-sided bypasses, it was found that a predetermined mixing performance can not be satisfactorily fulfilled when the opening ratio of the bypass passages was set exceed a certain level, even if an initial product employing the two-sided bypass with a filter member 31 free from clogging.

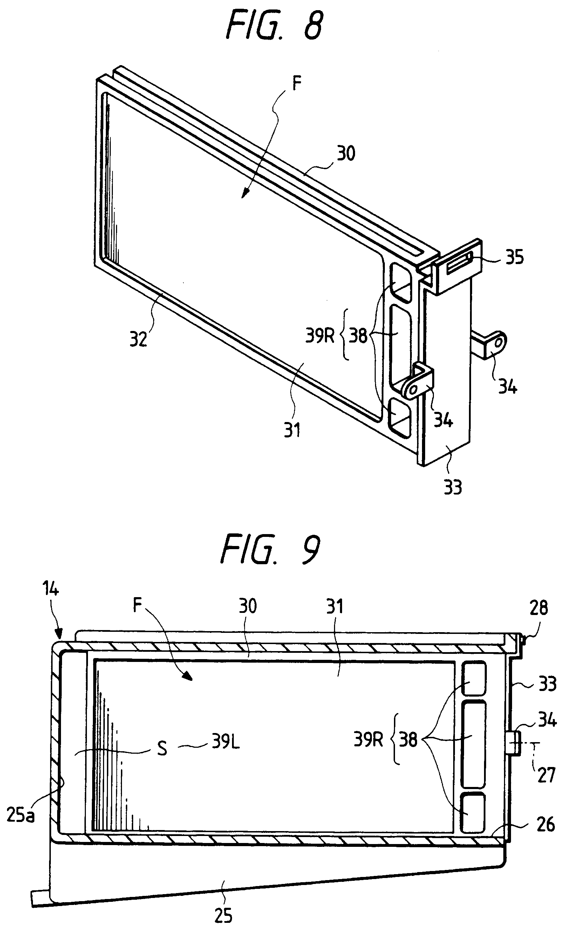

Fig. 7 is a graph showing the results of mixing performance tests in the vent mode when the opening ratio of the bypass passages with the two-sided bypasses is set at 20%. In this mixing performance tests, a decision to be made on whether the mixing performance is good or bad depends, as noted previously, on whether variations in temperature on the cool side are within the range of ΔTc and on whether variations in temperature on the hot side are within the range of ΔTh.

The test results revealed that the maximum temperature variation Δtc (max) on the cool side and the maximum temperature variation Δth (max) on the hot side both narrowly satisfied the regulated values ΔTc, ΔTh. When the opening ratio was set greater, the temperature variations widened and, as a consequence, the poor mixing performance became poor. Further tests were carried out for a filter unit such that the filter member 31 was covered to assume a deteriorated product while the opening ratio of the bypass passages with the two-sided bypass was set at 20%. The difference in temperature between the vent and foot winds in the bi-level mode became greater than the regulated temperature difference, and it was found that the temperature regulating performance became poor. Moreover, the temperature variations in the vent mode widened and it was found that the mixing performance became poor.

From these test results, it was found commendable that the setup conditions of the bypass passages included employing the two-sided bypasses, making the bypass passages have openings substantially equal in area to each other, and setting the opening ratio at 10% ∼ 20%.

The automobile air conditioner 10 fitted with the filter unit F having the bypass passages 39R, 39L arranged under the conditions above causes most of the air introduced from the intake unit 12 into the cooler unit 14 to be made free from dust and an offensive smell while the air is passing through the filter member 31 of the filter unit F, thus letting clean air flow into the heater unit 17. Moreover, part of the air introduced into the cooler unit 14 bypasses the filter member 31, passes through the bypass passages 39R, 39L and flows into the heater unit 17. These two kinds of air whose temperatures have been regulated in the heater unit 17 are blown toward the predetermined position of the car interior.

Since the bypass passages 39R, 39L form part of the air passage in the filter unit F according to the present invention, a minimum air flow usable for defrosting glass windows is secured even when the filter member 31 is completely clogged with dust, frozen moisture in winter or the like to ensure that a safety visual field is secured. Moreover, powder snow and moisture contained in the air taken into the intake unit 12 are prevented from being mixed with motor cooling air and from penetrating into the motor as an electrical component. The motor is thus rendered free from trouble.

The provision of the bypass passages 39R, 39L makes the filter unit F slightly inferior in dust collection performance to what is furnished with a filter member 31 over the whole cross sectional area of its air passage. However, user-to-user concern for the clogging of the filter member 31 greatly varies. In view of the present circumstances in which some users tend to clean and check such filter units very often and some do not, it would rather fit the purpose of raising the product value to seek for safety by securing a minimum air flow at the sacrifice of the dust collection performance.

Since the deviation or drifting of the flow of bypass air is obviated by providing the bypass passages 39R, 39L under certain conditions, the automobile air conditioner 10 is not badly affected by the filter unit F even though the automobile air conditioner 10 is fitted with the filter unit F having the bypass passages 39R, 39L and capable of fully satisfying the temperature regulating and mixing performance regulations at the time no filter unit F is installed. The regulations even at the time no filter unit F is installed are thus satisfied, it is unnecessary to design each of the units 12, 14, 17 by setting the mounting of the filter unit F as a premise. Consequently, the units 12, 14, 17 can be brought into common use, irrespective of the absence or presence of the filter unit F, and no increase in cost is incurred.

Although an illustration has been given of a case where the evaporator 13 is fitted in front of the filter unit F, the present invention is not restricted to such a case. Although it is preferred that the bypass passages 39R, 39L have openings substantially equal in area to each other, their opening areas need not necessarily be equal, depending on the unit configuration. Further, the filter unit F may naturally be fitted to an automobile air conditioner without having the cooling air intake 19. The bypass passages should preferably be provided in the end portions opposite to each other in the cross section of the air passage where the filter member 31 is located and besides the bypass passages may be positioned at both ends in either lateral or vertical direction, respectively.

Although an illustration has been given of a case where the integral combination of the two-sided bypass passages 39R, 39L and the filter member 31 constitute the filter unit F, the present invention is not restricted to such a case. As shown in Fig. 8, for example, length along the direction in which the filter unit F is inserted may be made shorter than the length of the unit case in that inserting direction and the bypass holes 38 may be formed in the rear side of the inserting direction. When the filter unit F thus constructed is held securely in position, the gap S between a left inner wall surface 25a and the filter unit F forms one bypass passage 39L on the front side in the inserting direction and the bypass holes 38 forms the other bypass passage 39R as shown in Fig. 9. According to the present embodiment, the left and right bypass passages should preferably have opening substantially equal in area to each other as well.

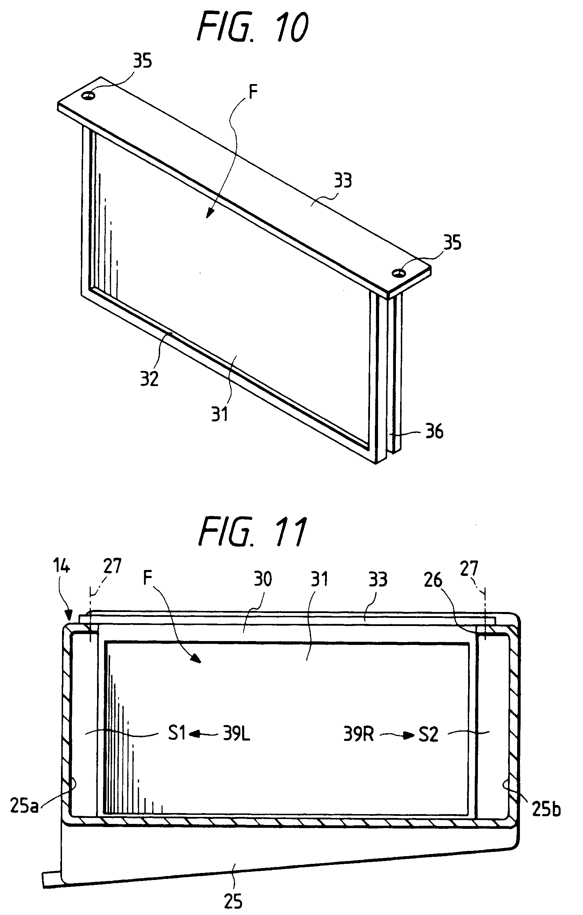

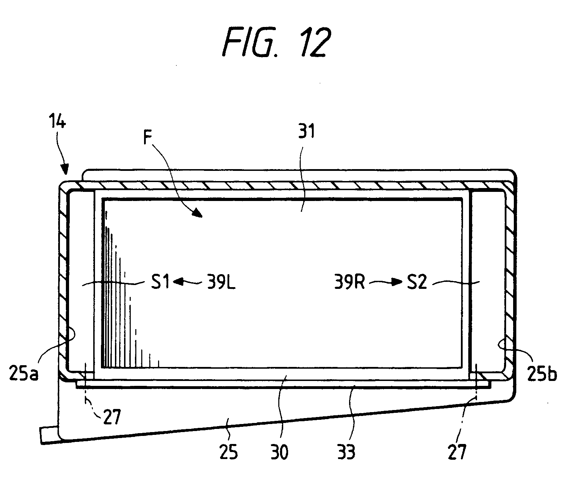

As shown in Fig. 10, moreover, the filter unit F having only the filter member 31 may be used. The filter unit F is, as shown in Fig. 11, inserted through the slot 26 formed in the upper edge face of the case 25 and fixed to the case 25 with screws 27 and the like. The length of the filter unit F in the lateral direction of Fig. 11 is set less than the length of the cross section of the air passage in the lateral direction thereof. When the filter unit F is inserted and held in position, a gap S1 is formed between the left inner wall surface 25a of the unit case 25 and the filter unit F and a gap S2 between the right inner wall surface 25b and the filter unit F. With these left and right gaps S1, S2, the left and right bypass passages 39L, 39R may have opening substantially equal in area to each other.

Unlike the embodiment of Fig. 11, what is shown in Fig. 12 is arranged so that the filter unit F of Fig. 9 is inserted inversely from bottom to top. In other words, the filter unit F is inserted through the slot 26 formed in the lower edge face and secured to the unit case 25 with screws 27 and the like.

As set forth above, the filter unit according to the present invention is provided with the opened bypass passages in the cross section of the air passage where the filter member 31 is located and used to make the flow of air bypass the filter member. As user-to-user concern for the clogging of the filter member 31 greatly varies and, in view of the present circumstances in which some users tend to clean and check such filter units very often and some do not, it would rather fit the purpose of raising the product value to seek for safety by securing a minimum air flow at the sacrifice of the dust collection performance.

Moreover, since the filter unit according to the present invention is provided with the bypass passages used to make the flow of air bypass the filter member under certain conditions, the air is caused to flow without deviation while bypassing the filter member, whereby the automobile air conditioner satisfactorily fulfils the prescribed performance. The bypass passages allows the air passage to be secured and even when the filter member clogs up, the minimum air flow necessary for defrosting glass windows can be secured with the effect of increasing safety.

In a case where the filter member is provided near the downstream side of the cooling air intake, powder snow and moisture are prevented from being taken into the cooling air intake even when the filter member is clogged with dust, frozen moisture and the like and the motor is rendered free from trouble accordingly.

## Claims

1. A filter unit (F), for use in an automobile air conditioner (10), comprising a generally planar filter member (31) for collecting dust contained in air passing through an air passage, and an open bypass passage (39L, 39R) provided in the cross-section of the air passage for letting the flow of air bypass the filter member (31), characterised in that there are a pair of the bypass passages (39L, 39R), which are located in the same plane as the filter member (31) and are spatially separated from one another by the filter member (31), with the total opening area deriving from the two bypass passages accounting for 10% ∼ 20% of the sectional area of the air passage.

2. A filter unit according to claim 1, characterised in that the bypass passages are located symmetrically to each other with respect to the filter member.

3. A filter unit according to claim 1 or claim 2, characterised in that the bypass passages are provided in respective opposite end portions of a rectangular cross-section of the air passage where the filter member is located.

4. A filter unit according to any one of claims 1 to 3, characterised in that the filter member is carried by a frame, and each of the bypass passages (39L, 39R) is constituted by a respective opening (38, 38) formed in the frame carrying the filter member.

5. A filter unit according to any one of claims 1 to 3, characterised in that one of the bypass passages (39R) is constituted by an opening (38) formed in a frame carrying the filter member, and the other of said bypass passages (39L) is constituted by a gap (S) formed in the cross-section of the air passage between an inner wall of the air passage and a distal end of the frame when the frame is secured in place.

6. A filter unit according to any one of claims 1 to 3, characterised in that the filter member is carried by a frame, and each of the bypass passages (39L, 39R) is defined by a respective gap (S1, S2) between lateral ends of the frame and inner walls of the air passage when the frame is secured in place.

7. A filter unit according to any preceding claim, characterised in that the bypass passages have substantially the same opening area.

8. A filter unit according to any preceding claim, characterised in that the bypass passages have a total opening area permitting air flow of at least 2 m³/min under a condition that the filter member is completely clogged.

9. A filter unit according to any preceding claim, characterised in that the filter member (31) is installed near the downstream side of a cooling air intake which is provided in the air passage for introducing part of the air sent by a blower fan (11) provided in an intake unit.

10. A filter unit according to claim 9, characterised in that the air passage forms part of an automobile air conditioner.

## Patentansprüche

1. Filtereinheit (F) für die Verwendung in einer Kraftfahrzeugklimaanlage (10), mit einem im allgemeinen ebenen Filterbauteil (31) zum Sammeln von Staub, der in Luft enthalten ist, welche durch einen Luftkanal hindurchströmt, und mit einem offenen Umleitungskanal (39L, 39R), der in dem Querschnittsbereich des Luftkanals vorgesehen ist, um die Luftströmung das Filterbauteil (31) umströmen zu lassen,
**dadurch gekennzeichnet, daß**
ein Paar von Umleitungskanälen (39L, 39R) vorgesehen ist, die in derselben Ebene wie das Filterbauteil (31) angeordnet sind und durch das Filterbauteil (31) räumlich voneinander beabstandet sind, wobei der von den zwei Umleitungskanälen erhaltene Gesamtöffnungsbereich 10% ∼ 20% des Querschnittsbereichs des Luftkanals beträgt.

2. Filtereinheit nach Anspruch 1, dadurch gekennzeichnet, daß die Umleitungskanäle in Bezug auf das Filterbauteil symmetrisch zueinander angeordnet sind.

3. Filtereinheit nach Anspruch 1 oder 2, dadurch gekennzeichnet, daß die Umleitungskanäle in jeweiligen entgegensetzten Endabschnitten eines rechtwinkligen Querschnittsbereiches des Luftkanals vorgesehen sind, wo das Filterbauteil angeordnet ist.

4. Filtereinheit nach einem der Ansprüche 1 bis 3, dadurch gekennzeichnet, daß das Filterbauteil von einem Gestell getragen wird und daß jeder der Umleitungskanäle (39L, 39R) aus einer jeweiligen Öffnung (38, 38) gebildet wird, die in dem das Filterbauteil tragenden Gestell ausgeformt ist.

5. Filtereinheit nach einem der Ansprüche 1 bis 3, dadurch gekennzeichnet, daß einer der Umleitungskanäle (39R) aus einer Öffnung (38) gebildet wird, die in einem das Filterbauteil tragenden Gestell ausgeformt ist, und daß der andere der Umleitungskanäle (39L) aus einem Spalt (S) gebildet wird, der in dem Querschnittsbereich des Luftkanals zwischen einer Innenwandung des Luftkanals und einem fernen Endabschnitt des Gestells ausgeformt ist, wenn das Gestell fest angeordnet wird.

6. Filtereinheit nach einem der Ansprüche 1 bis 3, dadurch gekennzeichnet, daß das Filterbauteil von einem Gestell getragen wird und daß jeder der Umleitungskanäle (39L, 39R) durch einen jeweiligen Spalt (S1, S2) zwischen fernen Endabschnitten des Gestells und Innenwandungen des Luftkanals definiert wird, wenn das Gestell fest angeordnet wird.

7. Filtereinheit nach einem vorhergehenden Anspruch, dadurch gekennzeichnet, daß die Umleitungskanäle im wesentlichen denselben Öffnungsbereich aufweisen.

8. Filtereinheit nach einem vorhergehenden Anspruch, dadurch gekennzeichnet, daß die Umleitungskanäle einen Gesamtöffnungsbereich aufweisen, der unter einer Bedingung, daß das Filterbauteil vollkommen verstopft ist, eine Luftströmung von wenigstens 2 m³/min gestattet.

9. Filtereinheit nach einem vorhergehenden Anspruch, dadurch gekennzeichnet, daß das Filterbauteil (31) in der Nähe der stromabwärtigen Seite eines Kühllufteinlasses angeordnet ist, der in dem Luftkanal vorgesehen ist, um einen Teil der Luft einzulassen, die von einem Gebläse (11) abgegeben wird, das in einer Einlaßeinheit vorgesehen ist.

10. Filtereinheit nach Anspruch 9, dadurch gekennzeichnet, daß der Luftkanal einen Abschnitt eines Kraftfahrzeugklimaanlage bildet.

## Revendications

1. Unité (F) à filtre destinée à être utilisée dans un appareil (10) de conditionnement d'air d'automobile, comprenant un organe de filtre (31) de forme générale plane destiné à collecter la poussière contenue dans l'air circulant dans un passage de circulation d'air, et un passage ouvert de dérivation (39L, 39R) disposé dans la section du passage d'air pour que le courant d'air puisse passer en dérivation par rapport à l'organe de filtre (31), caractérisée en ce qu'elle comprend deux passages de dérivation (39L, 39R) qui sont placés dans le même plan que l'organe de filtre (31) et qui sont séparés dans l'espace l'un de l'autre par l'organe de filtre (31), la section totale d'ouverture dérivant des deux passages de dérivation correspondant à 10 à 20 % de la section du passage d'air.

2. Unité à filtre selon la revendication 1, caractérisée en ce que les passages de dérivation sont placés symétriquement l'un de l'autre par rapport à l'organe de filtre.

3. Unité à filtre selon la revendication 1 ou 2, caractérisée en ce que les passages de dérivation sont disposés dans les parties respectives opposées d'extrémité d'une section rectangulaire du passage d'air dans lequel est placé l'organe de filtre.

4. Unité à filtre selon l'une quelconque des revendications 1 à 3, caractérisée en ce que l'organe de filtre est porté par un châssis, et chacun des passages de dérivation (39L, 39R) est constitué d'une ouverture respective (38, 38) formée dans le châssis portant l'organe de filtre.

5. Unité à filtre selon l'une quelconque des revendications 1 à 3, caractérisée en ce que l'un des passages de dérivation (39R) est constitué par une ouverture (38) formée dans un châssis portant l'organe de filtre, et l'autre des passages de dérivation (39L) est constitué d'un espace (S) formé dans la section du passage d'air entre une paroi interne du passage d'air et une extrémité externe du châssis lorsque celui-ci est fixé en position.

6. Unité à filtre selon l'une quelconque des revendications 1 à 3, caractérisée en ce que l'organe de filtre est porté par un châssis, et chacun des passages de dérivation (39L, 39R) est délimité par un espace respectif (S1, S2) placé entre les extrémités latérales du châssis et des parois internes du passage d'air lorsque le châssis est fixé en position.

7. Unité à filtre selon l'une quelconque des revendications précédentes, caractérisée en ce que les passages de dérivation ont pratiquement la même section d'ouverture.

8. Unité à filtre selon l'une quelconque des revendications précédentes, caractérisée en ce que les passages de dérivation ont une section totale d'ouverture permettant un débit d'air d'au moins 2 m³/min lorsque l'organe de filtre est totalement bouché.

9. Unité à filtre selon l'une quelconque des revendications précédentes, caractérisée en ce que l'organe de filtre (31) est placé près de la face aval de l'admission d'air de refroidissement qui est placée dans le passage d'air pour l'introduction d'une partie de l'air provenant d'un ventilateur soufflant (11) placé dans une unité d'admission.

10. Unité à filtre selon la revendication 9, caractérisée en ce que le passage d'air fait partie d'un appareil de conditionnement d'air d'automobile.
